# NEUE EUROPÄISCHE PATENTSCHRIFT

(11) **EP 3 385 548 B2**
(45) Veröffentlichungstag und Bekanntmachung des Hinweises auf die Entscheidung über den Einspruch: **14.10.2026**
(45) Hinweis auf die Patenterteilung: 05.05.2021
(21) Anmeldenummer: 18164979.9
(22) Anmeldetag: 29.03.2018
(51) Int. Cl.: F16B 13/00, F16B 25/00

(54) **BEFESTIGUNGSEINRICHTUNG**
FIXING DEVICE
DISPOSITIF DE FIXATION

(30) Priorität: 06.04.2017 DE 102017003369; 08.06.2017 DE 102017112686
(43) Veröffentlichungstag der Anmeldung: 10.10.2018
(73) Patentinhaber: Awafix GmbH, 87463 Dietmannsried (DE)
(72) Erfinder: RIMMEL, Fritz, 87538 Bolsterlang (DE)
(74) Vertreter: Körfer, Thomas

(56) Entgegenhaltungen:
- DE-A1- 102006 002 557
- DE-A1- 102006 003 172
- DE-A1- 4 041 765
- DE-C- 217 821
- DE-C- 231 696
- DE-U1- 202016 102 749
- US-A- 2 377 397
- US-A- 4 856 951

## Beschreibung

Die Erfindung betrifft ein Verfahren zur Befestigung eines Bauteiles an einem Untergrund nach dem Oberbegriff des Patentanspruchs 1 und ein Befestigungssystem zur Durchführung eines solchen Verfahrens.

Zur Befestigung von Leisten, Blechteilen und dergleichen sind Kunststoffdübel bekannt, die einen mit einem Gewinde versehenen Schaft aufweisen, der an seiner einen Seite einen spitz zulaufenden Bereich aufweist und auf seiner anderen Seite ein einstückig mit dem Schaft ausgebildetes Kragenteil besitzt. Zur Befestigung beispielsweise einer Kappleiste an einer an einer Hauswand oder dergleichen angebrachten Wärmedämmung wird zunächst die Kappleiste auf die Oberfläche der Wärmedämmung aufgelegt und in die gewünschte Lage gebracht. Anschließend werden die Befestigungslöcher der Kappleiste an der Oberfläche beispielsweise mit einem Stift markiert. Danach werden nach dem Entfernen der Kappleiste Kunststoffdübel an den Markierungen in die Wärmedämmung soweit eingedreht, bis das Kragenteil an der Oberfläche der Wärmedämmung anliegt. Schließlich werden nach dem Auflegen der Kappleiste und der Ausrichtung der Befestigungslöcher derselben zu den Kunststoffdübeln Schrauben, z. B. sogenannte Spenglerschrauben, die jeweils an der ihrer Spitze zugewandten Seite des Schraubenkopfes Dichtringe aufweisen, zur Befestigung der Kappleiste an der Wärmedämmung durch die Befestigungslöcher derselben eingeführt und in den Kunststoffdübeln verschraubt, bis die Kappleiste auf den Kragenteilen aufliegt und die Dichtringe der Schrauben an der Oberfläche der Kappleiste anliegen.

Ein Problem derartiger Kunststoffdübel besteht darin, dass zur Befestigung beispielsweise der erwähnten Kappleisten die zuvor geschilderten zahlreichen Arbeitsschritte erforderlich sind. Zudem kann es dazu kommen, dass es infolge einer Kapillarwirkung oder dergleichen an den Stellen, an denen die Kappleiste auf den Kragenteilen der Kunststoffdübel aufliegt, dazu kommt, dass Wasser in die Verbindungsstellen eindringt.

Aus der DE 20 2016 102 749 U1 ist zur Befestigung von beispielsweise Leisten an einer Wärmedämmung eine einteilig aus einem Kunststoffmaterial bestehende Kunststoffschraube bekannt, die einen mit einem Außengewinde versehenen Schaft aufweist, der an seiner einen Seite einen spitz zulaufenden Bereich besitzt und an der gegenüberliegenden Seite mit einem einstückig angeformten Kopfteil versehen ist. Das. Kopfteil weist an seiner dem Schaft abgewandten Seite z. B. eine bekannte Mehrkantschlüsseleinsenkung oder dergleichen auf, in die zum Ein- und Ausdrehen der Kunststoffschraube ein komplementär ausgebildetes Werkzeug eingesetzt werden kann. An der dem Schaft zugewandten Seite kann ein Dichtungsring vorgesehen sein.

Diese einteilig ausgebildete Kunststoffschraube ist problematisch, weil sie jeweils nur im Zusammenhang mit bestimmten Bauteilen und vorgegebenen Größen der Befestigungslöcher derselben eingesetzt werden kann.

Da die zuvor erwähnten Kunststoffschrauben einteilig ausgebildet sind, kann es gelegentlich dazu kommen, dass bei einer zu großen Drehmomentausübung das Kopfteil vom Schaft abgeschert bzw. abgedreht wird. Zudem sind die aus einem Kunststoffmaterial bestehenden Kopfteile weniger UV-beständig als die aus Metall bestehenden Spenglerschrauben.

Aus der DE 10 2006 002 557 A1 geht eine Betonschraube hervor, die zum Einschrauben in ein Bohrloch eines Mauerwerks bestimmt ist. Die Betonschraube weist eine Innenbohrung auf, in die nach dem Einschrauben der Betonschraube in das Bohrloch eine Schraube eingeschraubt werden kann, wenn die Innenbohrung als Gewindebohrung ausgebildet ist.

In der DE 10 2006 003 172 A1 ist ein Schraubanker mit Außengewinde zur Verankerung in einem Bohrloch beschrieben, das sich in einem Beton oder Mauerwerk befindet. In einem Sackloch eines Kopfteiles weist der Schraubanker ein Innengewinde zur Befestigung von Anbauteilen mit Schrauben an einer Außenfläche des Betons oder des Mauerwerks auf. In dem Sackloch des Kopfteiles befindet sich ein Antriebsabschnitt, in den ein Antriebswerkzeug eingreifen kann, um den Schraubanker in das Bohrloch einzudrehen.

Schließlich geht aus der DE 217821 C eine Schraube hervor, die eine Mutterhülse mit einem Innengewinde und einen in das Innengewinde einschraubbaren Bolzen umfasst. Dabei weist der Bolzen einen zahnartigen Ansatz auf, der nach dem Einschrauben des Bolzens in einen zahnartigen Einschnitt der Mutterhülse eingreift, um ein Überdrehen des Innengewindes beim Einschrauben der so zusammengeschraubten Schraube in ein nicht genügend vorgebohrtes Bohrloch zu verhindern. Nach dem Einschrauben der Schraube kann, da die Reibung zwischen dem Innengewinde der Mutterhülse und dem Bolzengewinde klein ist, kann beim Herausschrauben des Bolzens der Nachteil vermieden werden, dass bei etwas zu großem Bohrloch gleichzeitig auch die Mutterhülse herausgeschraubt wird.

Die Aufgabe der vorliegenden Erfindung besteht darin, ein Verfahren zur relativ einfachen, schnellen und effektiven Befestigung von Gegenständen bzw. Bauteilen, an einem Untergrund zu schaffen, das im Zusammenhang mit handelsüblichen Metallschrauben verwendbar ist.

Diese Aufgabe wird durch ein Verfahren mit den Merkmalen des Patentanspruches 1 gelöst. Demgemäß betrifft die Erfindung ein Verfahren zur Befestigung eines Bauteiles an einem Untergrund mit der Hilfe wenigstens einer Befestigungsvorrichtung in Form eines Schraubdübels mit einem durch ein Befestigungsloch des Bauteiles hindurchführbaren Schaltteil, an dessen einer Seite ein sich ausgehend vom Schaltteil verjüngender Spritzenbereich und an den Spitzenbereich sowie dem Schaltteil ein Außengewinde zum Verschrauben in dem Untergrund angeordnet sind. Der Schaft einer Schraube) wird teilweise in einen ihr zugewandten, an der dem Spitzenbereich abgewandten Seite des Schaftteiles angeordneten Aufnahmebereich des Schraubdübels eingedreht. Der Schraubdübel wird zusammen mit der teilweise in den Aufnahmebereich eingedrehten Schraube durch das Befestigungsloch des Bauteiles hindurchgeführt und der Schraubdübel wird durch Drehen der Schraube in dem Aufnahmebereich und Übertragen des Drehmomentes von der Schraube auf den Schraubdübel in dem Untergrund selbstfurchend befestigt.

Der wesentliche Vorteil der vorliegenden Erfindung besteht darin, dass mit einer Befestigungseinrichtung in der Form eines Schraubdübels in einer relativ einfachen sowie zeitsparenden und daher kostengünstigen Weise Bauteile an einem Untergrund, wie zum Beispiel einer Wärmedämmung, befestigbar sind. Dabei ist es von großer Bedeutung, dass beispielsweise ein einen vorliegenden Schraubdübel verwendender Spengler zunächst lediglich eine z. B. handelsübliche Metallschraube in den Aufnahmebereich des Schraubdübels teilweise manuell eindreht und dass er dann den vorliegenden Schraubdübel mit der manuell eingedrehten Schraube als Einheit zur Befestigung von Bauteilen an einer Wärmedämmung handhaben kann. Auf diese Weise können die oben im Zusammenhang mit der DE 20 2016 102 749 U1 im Hinblick auf die einfache Befestigung erläuterten Vorteile erzielt werden. Dies bedeutet, dass es lediglich erforderlich ist, das zu befestigende Bauteil an einer Wärmedämmung oder dergleichen in der richtigen Lage anzulegen und die vorliegenden Schraubdübel mit den manuell in die Aufnahmebereiche teilweise eingedrehten Schrauben durch die Befestigungslöcher des Bauteiles zu stecken und selbstfurchend in die Wärmedämmung einzudrehen, bis der Dichtungsring durch den Kopf der Schraube jeweils gegen die Oberfläche des befestigten Bauteiles und vor allem auch gegen die Stirnseite des Aufnahmebereiches des Schraubdübels gedrückt wird.

Dabei ist es besonders vorteilhaft, dass der vorliegende Schraubdübel im Zusammenhang mit handelsüblichen Schrauben unterschiedlicher Größen verwendbar ist. Zur individuellen Anpassung an die zu befestigenden Bauteile können die verwendeten Schrauben unterschiedlich groß sein und aus unterschiedlichen Materialen bestehen. Zum Beispiel können zur Befestigung von aus Kupfer bestehenden Kappleisten an einer Wärmedämmung Kupferschrauben verwendet werden.

Durch den erfindungsgemäßen Gebrauch des Schraubdübels wird eine Vergrößerung bzw. Erweiterung des Gewindes der Schraube erreicht. Dies führt wegen des vergrößerten Gewindeumfanges zu einer besonders effektiven Befestigung der Schraube im Untergrund.

Zur Erzielung bestimmter und individueller optischer und ästhetischer Wirkungen können Schrauben unterschiedlicher Farben und Formen zum Einsatz gelangen.

Vorteilhafterweise sind bei der Ausübung des erfindungsgemäßen Verfahrens die zuvor geschilderten Beschädigungen der Befestigungseinrichtungen beim Eindrehen der Schrauben nicht zu erwarten.

Da handelsübliche Metallschrauben im Zusammenhang mit dem vorliegenden Verfahren verwendet werden, sind auch keine auf UV-Strahlen zurückzuführenden Beschädigungen zu erwarten.

Da die Aufnahmebereiche der im Zusammenhang mit dem vorliegenden Verfahren verwendeten Schraubdübel aus Kunststoff bestehen, entstehen bei der Verwendung derselben im Zusammenhang mit Metallschrauben keine unerwünschten Wärmebrücken.

Erfindungsgemäß weist die im Zusammenhang mit dem vorliegenden Verfahren verwendete Schraube an der ihrem Schaft zugewandten Seite ihres Kopfes einen Dichtungsring auf. Auf diese Weise wird eine Abdichtung der Verbindungsstelle zwischen dem Bauteil und der Schraube erreicht.

Der Aufnahmebereich des Schraubendübels weist einen sich ausgehend vom Schaftteil nach außen erweiternden ersten Bereich, zur Aufnahme des Spitzenbereiches der Schraube in einem ersten Hohlraum und einen an den ersten Bereich angrenzenden zweiten Bereich zur Aufnahme zumindest eines Teiles des Schaftes der Schraube in einem zweiten Hohlraum auf. Insbesondere können bei dieser Ausgestaltung Schrauben unterschiedlicher Größen und Formen verwendet werden.

Der zweite Bereich ist bis zu seinem freien Ende zylindrisch ausgebildet. Dadurch wird erreicht, dass ein selbstfurchendes Eindrehen des Schraubdübels in einen Untergrund ohne Behinderung möglich ist. Bei bekannten Schraubdübeln wird dieses unbehinderte Eindrehen durch ein am Dübelende vorgesehenes Kragenteil unmöglich gemacht.

Um ein besonders effektives Verschrauben einer Schraube im Aufnahmeteil zu ermöglichen ist der zweite Hohlraum zylindrisch ausgebildet, und weist an seiner Wandung sich in Längsrichtung des Aufnahmebereiches erstreckende Längsstege auf, die in den zweiten Hohlraum hineinragen und in denen das Gewinde der Schraube verschraubbar ist. Besonders bevorzugt sind dabei über den Umfang der Wandung des zweiten Hohlraumes mehrere Längsstege, vorzugsweise gleichmäßig verteilt.

Vorteilhafterweise bestehen der Spitzenbereich, das Schaftteil, das Außengewinde und der Aufnahmebereich einstückig aus einem Kunststoffmaterial.

Erfindungsgemäß ist eine Ausgestaltung, bei der sich das Außengewinde zumindest teilweise oder ganz auch über den Aufnahmebereich erstreckt. Hierdurch wird ein noch besserer Halt des Schraubdübels in den Untergrund erreicht. Dabei besitzt das Außengewinde im Schaftbereich und im Aufnahmebereich denselben Außendurchmesser.

Bei einer vorteilhaften Ausgestaltung des erfindungsgemäßen Verfahrens zur Befestigung von Bauteilen an einem relativ weichen Untergrund, wie beispielsweise einer Wärmedämmplatte,. wird zunächst eine Schraube teilweises in den Aufnahmebereich des Schraubdübels eingedreht. Danach wird das Bauteil in der gewünschten Lage an den Untergrund angelegt. Anschließend wird der Schraubdübel durch das Befestigungsloch des Bauteiles gesteckt und in den Untergrund selbstfurchend eingeschraubt, bis das Bauteil am Untergrund und die Schraube am Bauteil anliegen.

Um nach dem erfindungsgemäßen Verfahren mit einem Schraubdübel ein Befestigungslöcher aufweisendes Bauteil an einem relativ festen Untergrund, wie beispielsweise einem Betonstein, zu befestigen, wird vorteilhafterweise in der folgenden Weise verfahren. Zunächst wird eine Schraube teilweise in den Aufnahmebereich des Schraubdübels eingedreht. Dann wird das Bauteil in der gewünschten Lage an den Untergrund angelegt. Anschließend wird am Ort des Befestigungsloches ein Bohrloch in den Untergrund gebohrt. Der Schraubdübel wird dann durch ein Befestigungsloch des Bauteiles in das Bohrloch des Untergrundes gesteckt und selbstfurchend in das vorgebohrte Bohrloch des Untergrundes eingeschraubt, bis das Bauteil am Untergrund und die Schraube am Bauteil anliegen.

Im Folgenden werden die Erfindung und deren Ausgestaltungen im Zusammenhang mit den Figuren näher erläutert.

Es zeigen:
Figur 1 eine Seitenansicht einer im Zusammenhang mit der Erfindung verwendeten Befestigungseinrichtung;
Figur 2 einen Schnitt durch die Befestigungseinrichtung der Figur 1 entlang der Linie II-II;
Figur 3 eine vergrößerte Darstellung zur Erläuterung des Aufnahmebereiches der Befestigungseinrichtung, wobei in dem Aufnahmebereich keine Schraube enthalten ist;
Figur 4 eine der Figur 3 entsprechende Darstellung, wobei jedoch in dem Aufnahmebereich eine Schraube angeordnet und mit der Befestigungseinrichtung ein Bauteil an einem Untergrund befestigt ist;
Figur 5 eine weitere Darstellung zur Erläuterung der Erfindung; und
Figuren 6 und 7 Weiterbildungen der Befestigungsvorrichtung.

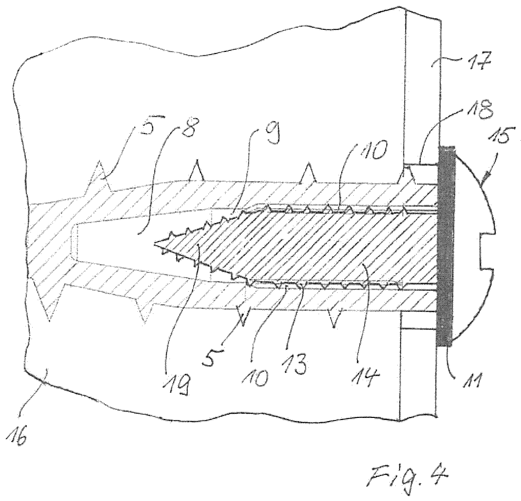

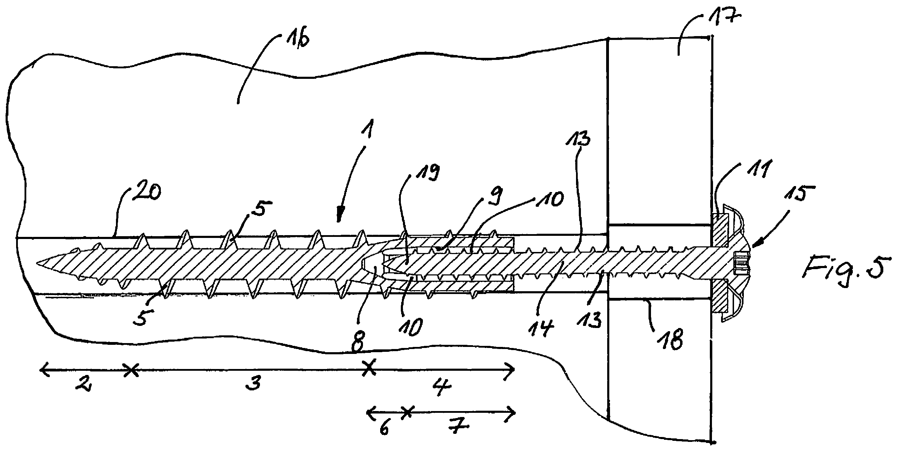

Gemäß den Figuren umfasst die vorliegende Befestigungseinrichtung, die die Form eines einteilig aus einem Kunststoffmaterial, wie beispielsweise Polyamid oder einem glasverstärktem Kunststoff, hergestellten Schraubdübels 1 aufweist, im Wesentlichen ein Schaftteil 3, an dessen einer Seite ein konisch bzw. spitz zulaufender Spitzenbereich 2 angeordnet ist. An der anderen, dem Spitzenbereich 2 gegenüber liegenden Seite des Schaftteils 3 ist ein Aufnahmebereich 4 zur Aufnahme bzw. zum Eindrehen einer Schraube 15 (Figuren 4, 5) vorgesehen. Der Schraubdübel 1 weist ein Außengewinde 5 auf, das sich ausgehend von dem Spitzenbereich 2 entlang dem Schaftteil 3 und entsprechend der dargestellten Ausführungsform auch über den Aufnahmebereich 4 erstreckt. Das Außengewinde 5 ist einstückig mit dem Spitzenbereich 2, dem Schaftteil 3 und gegebenenfalls auch dem Aufnahmebereich 4 ausgebildet und besteht ebenfalls aus dem genannten Kunststoffmaterial. Im Schaftteil 3 und im Aufnahmebereich 4 weist das Außengewinde 5 einen gleichbleibenden Außendurchmesser auf, der derart bemessen ist, dass der Schraubendübel 1 durch ein Befestigungsloch 18 des Bauteiles 17 hindurchführbar ist, wie dies die Figur 4 zeigt. Im Spitzenbereich 2 verjüngt sich das Außengewinde 5 vorzugsweise konisch zur Spitze des Spritzenbereiches 2 hin.

Der Aufnahmebereich 4 erweitert sich in einem an das Schaftteil 3 anschließenden ersten Bereich 6 nach außen und geht anschließend in einen zweiten zylindrischen Bereich 7 über. In dem ersten Bereich 6 befindet sich ein sich vorzugsweise konisch in Richtung auf das Schaftteil 3 verjüngender Hohlraum 8, der zur Aufnahme des Spitzenbereiches 19 der Schraube 15 dient.

Der Hohlraum 8 geht in einen zylindrischen Hohlraum 9 über, der sich in Richtung auf die dem Spitzenbereich 2 abgewandte Seite in dem zweiten Bereich 7 des Aufnahmebereiches 4 befindet und zur Aufnahme und Befestigung des Gewindes 13 des Schaftes 14 der Schraube 15 dient.

Zur besonders effektiven Befestigung bzw. zum besseren Einfurchen des Gewindes der Schraube 15 weist die den zweiten Hohlraum 9 begrenzende Wandung mehrere Längsstege 10 auf, die jeweils in den Hohlraum 9 hinein vorstehen und in die sich die Gewindegänge der Schraube 15 beim Eindrehen derselben selbstfurchend einschneiden. Vorzugsweise sind die Längsstege 10 gleichmäßig über die Wandung des Hohlraumes 9 verteilt.

Zur Befestigung eines Bauteiles 17, bei dem es sich beispielsweise um eine Leiste oder dergleichen handelt, an der Außenseite eines Untergrundes 16, bei dem es sich z. B. um eine Wärmedämmung handelt, wird gemäß Figur 4 das Bauteil 17 zunächst in der richtigen Lage an die Oberfläche der Wärmedämmung 16 angelegt. Dann wird der vorliegende Schraubdübel 1 mit einer manuell teilweise in den Aufnahmebereich 4 eingedrehten Schraube 15 als Einheit durch das Befestigungsloch 18 des Bauteiles 17 gesteckt und mit einem Schraubendreher oder dergleichen in die Wärmedämmung eingedreht, wobei sich das Außengewinde 5 selbstfurchend in diese einschneidet. Dabei wird die Schraube 15 in Richtung auf das Bauteil 17 gezogen und schneidet sich ihr Gewinde 13 in die Längsstege 10 des Aufnahmebereiches 4 ein, bis schließlich der Dichtungsring 11 an der Stirnseite des Schraubdübels 1 bzw. dessen Aufnahmebereiches 4 und an dem Bauteil 17 anliegt. Das Einstecken der aus Schraube 15 und Schraubdübel 1 bestehenden Einheit durch das Befestigungsloch 18 des Bauteiles 17 ist möglich, weil der Schraubdübel 1 an seiner dem Spitzenbereich 2 abgewandten Seite keinen nach außen vorstehenden Kragen aufweist und weil der Durchmesser des Außengewindes 5 im Bereich des Schafteiles 3 und des daran anschließenden Aufnahmebereiches 4 kleiner bemessen ist, als der Durchmesser des Befestigungsloches 18. Dabei trägt das Außengewinde 5 im Bereich des Aufnahmeteiles 4 zur weiteren Erhöhung der Festigkeit der Verbindung zwischen dem Schraubdübel 1 und dem Untergrund 16 sowie dem Bauteil 17 bei.

Da der Aufnahmebereich 4 sich ausgehend vom Schaftteil 3 erweitert, ist es vorteilhafterweise möglich, den vorliegenden Schraubdübel 1 im Zusammenhang mit Schrauben 15 unterschiedlicher Größen zu verwenden, soweit diese im zweiten Hohlraum 9 verschraubbar sind. Ferner können in dem Aufnahmebereich 4 wahlweise Schrauben 15 unterschiedlicher Materialien und Formen sowie unterschiedlicher Farben verwendet werden.

Der vorliegende Schraubdübel 1 kann ohne Vorbohren in einen weniger festen Untergrund 16, wie beispielsweise in eine Wärmedämmungsschicht oder in Porenbeton, selbstfurchend eingeschraubt werden. Bei einem Untergrund 16 aus einem festeren Material, wie beispielsweise bei Betonsteinen oder dergleichen sollte je nach Festigkeit des Untergrundes 16 mit unterschiedlichen Durchmessern vorgebohrt werden.

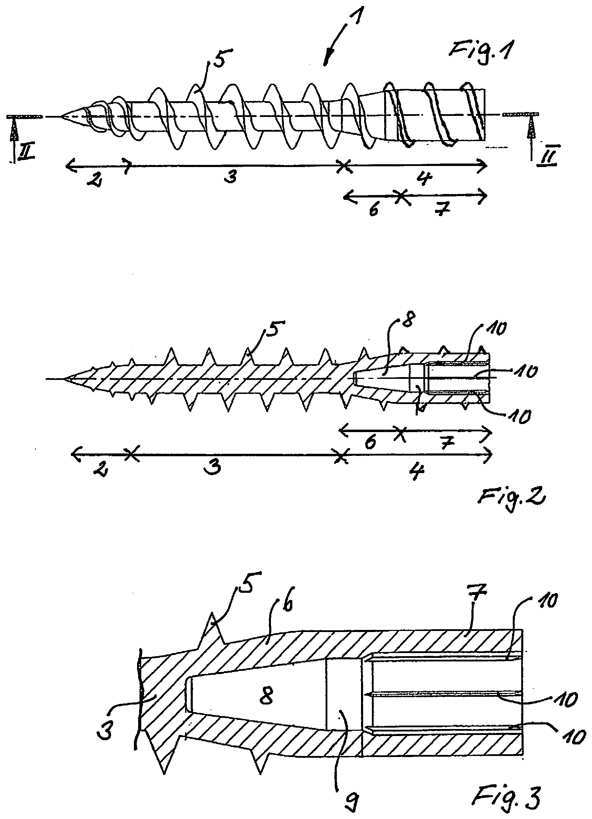

Allgemein gesagt betrifft die vorliegende Erfindung ein Verfahren zur Verwendung einer Befestigungseinrichtung in der Form eines selbstfurchenden Schraubdübels 1, der in der im Zusammenhang mit den Figuren 1 und 2 bereits beschriebenen Weise beschaffen ist und einen Spitzenbereich 2, ein Schaftteil 3, einen Aufnahmebereich 4 und ein Außengewinde 5 umfasst. Dabei ist es von ganz wesentlicher Bedeutung, dass dieser Schraubdübel 1 an seiner dem Spitzenbereich 2 abgewandten Seite kein Kragenteil oder dergleichen besitzt, wie dies bei auf dem Markt befindlichen Schraubdübeln der Fall ist. Jedes auch noch so geringfügig über den Durchmesser des Aufnahmebereiches vorstehende Kragenteil würde das selbstfurchende Einschneiden des Außengewindes 5 in den Untergrund 16 oder gegebenenfalls in eine durch Vorbohren in demselben erzeugte Bohrung 20 behindern. Um dies zu vermeiden verläuft der Aufnahmebereich 4 bzw. sein zweiter Bereich 7 bis zu seinem freien Ende zylindrisch, sodass ein völlig unbehindertes Eindrehen des Schraubdübels 1 in den Untergrund 16 oder in die Bohrung 20 desselben möglich ist. Auf diese Weise wird es möglich, den erfindungsgemäßen Schraubdübel 1 selbstfurchend in einem beliebigen Untergrund 16 gemäß Figur 5 einzuschrauben, wobei je nach Beschaffenheit bzw. Festigkeit des Untergrundes 16 zuvor ein Bohrloch 20 in den Untergrund 16 eingebracht werden kann.

Das wesentlich Neue besteht dabei darin, dass, weil, wie bereits ausgeführt, kein Kragenteil oder dergleichen vorhanden ist, der Schraubdübel 1 zusammen mit einer in den Aufnahmebereich 4 teilweise eingedrehten Schraube 15 in ein das Bauteil 17 ganz durchsetzendes Befestigungsloch 18 und ein dazu ausgerichtetes, den Untergrund 16 zumindest teilweise durchsetzendes Bohrloch 20 eingeschoben werden kann und danach durch weiteres Drehen der Schraube 15 selbstfurchend bzw. selbstschneidend im Untergrund 16 bzw. in der Wandung eines Bohrloches 20 im Bereich des Untergrundes 16 befestigt wird. Dabei wird das auf die Schraube 15 ausgeübte Drehmoment dann, wenn diese in den Aufnahmebereich 4 eingeschraubt ist, auf den Schraubdübel 1 übertragen, so dass sich das Außengewinde 5 des Schaftteiles 3 in die Wandung des Bohrloches 20 eingräbt bzw. einschneidet. Dabei spielt es vorteilhafterweise keine Rolle, wie lang die Schraube 15 ist, sodass vorteilhafterweise Bauteile 17, beispielsweise Holzleisten oder -latten unterschiedlicher Dicken an einem relativ festem Untergrund 16, beispielsweise an Mauerwerkziegeln, Betonsteinen, Kalksandsteinen etc. befestigt werden können, wobei in den Untergrund 16 durch Vorbohren ein Bohrloch 20 eingebracht wird. Dabei ist der Durchmesser des Bohrloches 20 kleiner als der Durchmesser der Gewindegänge des Schraubdübels 1. Die Bemessung des Bohrloches 20 hängt dabei von der Festigkeit des Untergrundes 16 ab.

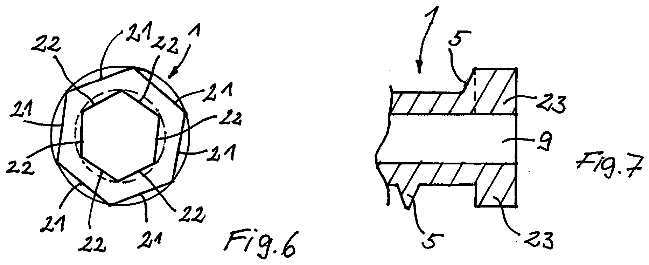

Es ist denkbar an dem dem Spitzenbereich 19 des Schraubdübels 1 abgewandten Endbereich eine Drehhilfe vorzusehen, um insbesondere bei einer beabsichtigten Demontage der Befestigungseinrichtung, nach dem Herausdrehen der Schraube 15 aus dem Schraubdübel 1 und nach dem Entfernen des Bauteiles 17 vom Untergrund 16, das Herausdrehen des Schraubdübels 1 aus dem Untergrund 16 zu erleichtern. Diese Drehhilfe weist gemäß Figur 6 beispielsweise die Form eines unregelmäßigen Außenprofils 21 an dem dem Spitzenbereich 2 abgewandten Ende des Schraubdübels 1 oder die Form eines unregelmäßigen Innenprofils 22 am äußeren Ende des Aufnahmebereiches 4 auf, an der ein Werkzeug zum Ein- und Ausdrehen des Schraubdübels 1 bei der Demontage bzw. Montage angesetzt werden kann. Beispielsweise kann es sich bei dem Innenprofil 22 um ein Torx-Innenprofil zum Ansetzen eines Torx-Schraubenschlüssels handeln. Das Außenprofil 21 kann beispielsweise mit einem Mehrkant-Steckschlüssel gedreht werden.

Gemäß Figur 7 ist es möglich, an dem dem Spitzenbereich 2 des Schraubdübels 1 abgewandten Endbereich außenseitig einen nach außen vorstehenden kreisrunden, koaxial zum Schraubdübel 1 angeordneten Randbereich 23 vorzusehen, der nach der Montage des Schraubdübels 1 dicht am Innenumfang des Untergrundes 16 (Figur 4) oder des Bohrloches 20 (Figur 5) anliegt. Dabei ist der Randbereich 23 so bemessen, dass sein Außendurchmesser nicht größer als derjenige des angrenzenden Gewindes 5 ist, sodass der Randbereich 23 durch das Befestigungsloch 18 bei der Montage hindurchführbar ist und in den Untergrund 16 oder in das Bohrloch 20 eindringen kann, um eine besonders stabile Lage und einen besonders festen Halt des Schraubdübels 1 zu bewirken.

Es ist ferner denkbar, den Spitzenbereich 2 des Schraubdübels 1 selbstschneidend auszugestalten, um ein Eindrehen des Schraubdübels 1 in einen Untergrund 16 zu erleichtern.

## Patentansprüche

1. Verfahren zur Befestigung eines Bauteiles (17) an einem Untergrund (16) mit der Hilfe wenigstens einer Befestigungseinrichtung in der Form eines Schraubdübels (1) mit einem durch ein Befestigungsloch (18) des Bauteiles (17) hindurchführbaren Schaftteil (3), an dessen einer Seite ein sich ausgehend vom Schaftteil (3) verjüngender Spitzenbereich (2) und an den Spitzenbereich (2) sowie dem Schaftteil (3) ein Außengewinde (5) zum Verschrauben in dem Untergrund (16) angeordnet sind, wobei der Schaft (14) einer Schraube (15) teilweise in einen ihr zugewandten, an der dem Spitzenbereich (2) abgewandten Seite des Schaftteiles (3) angeordneten Aufnahmebereich (4) des Schraubdübels (1) eingedreht wird,
**dadurch gekennzeichnet,**
**dass** das Bauteil (17) in der gewünschten Lage an dem Untergrund (16) angelegt wird, dass der Schraubdübel (1) zusammen mit der teilweise in den Aufnahmebereich (4) eingedrehten Schraube (15) durch das Befestigungsloch (18) des Bauteiles (17) hindurchgeführt wird und dass der Schraubdübel (1) durch Eindrehen der Schraube (15) in den Aufnahmebereich (4) und Übertragen des Drehmomentes durch weiteres Drehen der Schraube (15), dann, wenn die Schraube (15) in den Aufnahmebereich (4) eingeschraubt ist, von der Schraube (15) auf den Schraubdübel (1) in den Untergrund (16) selbstfurchend eingeschraubt wird, sodass das Bauteil (17) am Untergrund (16) und die Schraube (15) am Bauteil (17) anliegen,
wobei die Schraube (15) an der ihrem Schaft (14) zugewandten Seite ihres Kopfes (12) einen Dichtungsring (11) aufweist und
wobei der Aufnahmebereich (4) einen sich ausgehend vom Schaftteil (3) nach außen erweiternden ersten Bereich (6) zur Aufnahme des Spitzenbereiches (2) der Schraube (15) in einem ersten Hohlraum (8) und einen an den ersten Bereich (6) angrenzenden zweiten Bereich (7) zur Aufnahme zumindest eines Teiles des Schaftes (14) der Schraube (15) in einem zweiten Hohlraum (9) aufweist und
wobei der zweite Hohlraum (9) zylindrisch ausgebildet ist und an seiner Wandung sich in Längsrichtung des Aufnahmebereiches (4) erstreckende Längsstege (10) aufweist, die in den zweiten Hohlraum (9) hineinragen und in denen das Gewinde (13) der Schraube (15) verschraubbar ist und
wobei sich das Außengewinde (5) zumindest teilweise auch über den Aufnahmebereich (4) erstreckt und
wobei das Außengewinde (5) im Schaftbereich (3) und im Aufnahmebereich (4) denselben Außendurchmesser besitzt.

2. Verfahren nach Anspruch 1, **gekennzeichnet durch** die folgenden Schritte:
a) Teilweises Eindrehen einer Schraube (15) in den Aufnahmebereich (4) der Befestigungseinrichtung des Schraubdübels;
b) Anlegen des Bauteiles (17) in der gewünschten Lage an den Untergrund (16);
c) Durchführen einer Befestigungseinrichtung **durch** ein Befestigungsloch (18) des Bauteiles (16) und selbstfurchendes Einschrauben des Schraubdübels (1) in den Untergrund (16) bis das Bauteil (17) am Untergrund (16) und die Schraube (15) am Bauteil (17) anliegen.

3. Verfahren nach Anspruch 1, **gekennzeichnet durch** die folgenden Schritte:
a) Teilweises Eindrehen einer Schraube (15) in den Aufnahmebereich (4) des Schraubdübels (1);
b) Anlegen des Bauteiles (17) in einer gewünschten Lage an dem Untergrund (16).
c) Vorbohren eines Bohrloches (20) in den Untergrund (16);
d) Einführen des Schraubdübels (1) **durch** ein Befestigungsloch (18) des Bauteiles (17) in das Bohrloch (20) des Untergrundes (16);
e) Selbstfurchendes Einschrauben des Schraubdübels in das Bohrloch (20) des Untergrundes (16) bis das Bauteil (17) am Untergrund (16) und die Schraube (15) am Bauteil (17) anliegen.

4. Befestigungssystem zur Befestigung eines Bauteils (17) an einem Untergrund (16) mit einer Befestigungseinrichtung in Form eines Schraubdübels (1) und mit einer Schraube (15), wobei das Befestigungssystem zur Durchführung des Verfahrens nach einem der Ansprüche 1 bis 3 ausgebildet ist,
wobei der Schraubdübel (1) ein durch ein Befestigungsloch (18) des Bauteiles (17) hindurchführbares Schaftteil (3) aufweist, an dessen einer Seite ein sich ausgehend vom Schaftteil (3) verjüngender Spitzenbereich (2) und an dem Spitzenbereich (2) sowie dem Schaftteil (3) ein Außengewinde (5) zum Verschrauben in dem Untergrund angeordnet sind, und
wobei der Schraubdübel (1) an der anderen, dem Spitzenbereich (2) abgewandten Seite einen ebenfalls durch das Befestigungsloch (18) hindurchführbaren Aufnahmebereich (4) aufweist, in dem der Schaft (14) der Schraube (15) verschraubbar ist,
wobei die Schraube (15) an der ihrem Schaft (14) zugewandten Seite ihres Kopfes (12) einen Dichtungsring (11) aufweist und wobei der Aufnahmebereich (4) einen sich ausgehend vom Schaftteil (3) nach außen erweiternden ersten Bereich (6) zur Aufnahme des Spitzenbereiches (2) der Schraube (15) in einem ersten Hohlraum (8) und einen an den ersten Bereich (6) angrenzenden zweiten Bereich (7) zur Aufnahme zumindest eines Teiles des Schaftes (14) der Schraube (15) in einem zweiten Hohlraum (9) aufweist undwobei der zweite Hohlraum (9) zylindrisch ausgebildet ist und an seiner Wandung sich in Längsrichtung des Aufnahmebereiches (4) erstreckende Längsstege (10) aufweist, die in den zweiten Hohlraum (9) hineinragen und in denen das Gewinde (13) der Schraube (15) verschraubbar ist und wobei sich das Außengewinde (5) zumindest teilweise auch über den Aufnahmebereich (4) erstreckt und
wobei das Außengewinde (5) im Schaftbereich (3) und im Aufnahmebereich (4) denselben Außendurchmesser besitzt.

5. Befestigungssystem nach Anspruch 4, **dadurch gekennzeichnet, dass** der zweite Bereich (7) bis zu seinem freien Ende zylindrisch ausgebildet ist.

6. Befestigungssystem nach Anspruch 4, **dadurch gekennzeichnet, dass** über den Umfang der Wandung des zweiten Hohlraumes (9) mehrere Längsstege (10), vorzugsweise gleichmäßig, verteilt sind.

7. Befestigungssystem nach einem der Ansprüche 4 bis 6, **dadurch gekennzeichnet, dass** der Spitzenbereich (2), das Schaftteil (3), das Außengewinde (5) und der Aufnahmebereich (4) einstückig aus einem Kunststoffmaterial bestehen.

8. Befestigungssystem nach einem der Ansprüche 4 bis 7, **dadurch gekennzeichnet, dass** der Aufnahmebereich (4) zur Aufnahme und Befestigung von Schrauben (15) unterschiedlicher Großen, Materialien und Farben geeignet ist.

9. Befestigungssystem nach einem der Ansprüche 4 bis 8, **dadurch gekennzeichnet, dass** das dem Spitzenbereich (2) abgewandte Ende des Aufnahmebereiches (4) ein als Drehhilfe geeignetes Außenprofil (21) und/oder Innenprofil (22) aufweist, an dem ein Werkzeug zum Drehen des Schraubdübels (1) ansetzbar ist.

10. Befestigungssystem nach einem der Ansprüche 4 bis 9, **dadurch gekennzeichnet, dass** an dem dem Spitzenbereich (2) abgewandten Ende des Aufnahmebereiches (4) außenseitig ein kreisrunder, koaxialer Randbereich (23) angeordnet ist, dessen Außendurchmesser demjenigen des angrenzenden Gewindes (5) entspricht.

## Claims

1. A method for fastening a component (17) to a substrate (16) using at least one fastening device in the form of a screw anchor (1) having a shank portion (3) that can be passed through a fastening hole (18) in the component (17), on one side of which is a tapered tip region (2) extending from the shank portion (3), and on the tip region (2) as well as the shank portion (3) is an external thread (5) for screwing into the substrate (16), wherein the shank (14) of a screw (15) is partially screwed into a receiving region (4) of the screw anchor (1) that faces it and is arranged on the side of the shank portion (3) opposite the tip region (2),
**characterized in**
**that** the component (17) is positioned in the desired location against the substrate (16), that the screw anchor (1), together with the screw (15) partially screwed into the receiving area (4), is passed through the fastening hole (18) of the component (17), and that the screw anchor (1) is screwed into the substrate (16) by the screw (15) through the action of the screw (15) being screwed into the receiving area (4) and the torque being transmitted by further turning the screw (15); once the screw (15) is screwed into the receiving area (4), the torque is transferred from the screw (15) to the screw anchor (1) into the substrate (16), so that the component (17) rests against the substrate (16) and the screw (15) rests against the component (17),
wherein the screw (15) has a sealing ring (11) on the side of its head (12) facing its shank (14), and
wherein the receiving region (4) comprises a first section (6) that widens outward from the shaft portion (3) into a first cavity (8) for receiving the tip region (2) of the screw (15), and a second region (7) adjacent to the first region (6) for receiving at least a portion of the shank (14) of the screw (15) in a second cavity (9), and
wherein the second cavity (9) is cylindrical in shape and has longitudinal ribs (10) on its wall extending in the longitudinal direction of the receiving region (4), which ribs project into the second cavity (9) and into which the thread (13) of the screw (15) can be screwed, and wherein the external thread (5) also extends, at least partially, beyond the receiving region (4), and
wherein the external thread (5) has the same outer diameter in the shank region (3) and in the receiving region (4).

2. A method according to claim 1, **characterized by** the following steps:
a) Partially screwing a screw (15) into the receiving area (4) of the fastening device of the screw anchor;
b) Positioning the component (17) in the desired position against the substrate (16);
c) Inserting a fastening device through a fastening hole (18) in the component (16) and self-tapping the screw anchor (1) into the substrate (16) until the component (17) abuts the substrate (16) and the screw (15) abuts the component (17).

3. The method according to claim 1, **characterized by** the following steps:
a) Partially screwing a screw (15) into the receiving area (4) of the screw anchor (1);
b) Positioning the component (17) in a desired orientation against the substrate (16);
c) Pre-drilling a hole (20) in the substrate (16);
d) Inserting the screw anchor (1) through a fastening hole (18) in the component (17) into the drill hole (20) in the substrate (16);
e) Self-tapping screwing of the screw anchor into the drill hole (20) in the substrate (16) until the component (17) abuts against the substrate (16) and the screw (15) abuts against the component (17).

4. A fastening system for fastening a component (17) to a substrate (16), comprising a fastening device in the form of a screw anchor (1) and a screw (15), wherein the fastening system is configured to carry out the method according to one of claims 1 through 3, wherein the screw anchor (1) comprises a shank portion (3) that can be passed through a fastening hole (18) in the component (17), on one side of which there is a tapered tip region (2) extending from the shank portion (3), and on the tip region (2) as well as the shaft portion (3) are arranged, and
wherein the screw anchor (1) has, on the other side facing away from the tip region (2), a receiving region (4) that can also be passed through the fastening hole (18), into which the shank (14) of the screw (15) can be screwed,
wherein the screw (15) has a sealing ring (11) on the side of its head (12) facing its shank (14), and wherein the receiving region (4) has a first region (6) that expands outward from the shank portion (3) to accommodate the tip region (2) of the screw (15) in a first cavity (8) and a second region (7) adjacent to the first region (6) for receiving at least a portion of the shank (14) of the screw (15) in a second cavity (9), and wherein the second cavity (9) is cylindrical in shape and has longitudinal ribs (10) extending along its wall in the longitudinal direction of the receiving region (4), which project into the second cavity (9) and into which the thread (13) of the screw (15) can be screwed, and wherein the external thread (5) also extends, at least partially, over the receiving region (4), and
wherein the external thread (5) has the same outer diameter in the shaft region (3) and in the receiving region (4).

5. A fastening system according to claim 4, **characterized in that** the second region (7) is cylindrical up to its free end.

6. A fastening system according to claim 4, **characterized in that** a plurality of longitudinal ribs (10) are distributed, preferably uniformly, around the circumference of the wall of the second cavity (9).

7. A fastening system according to any one of claims 4 through 6, **characterized in that** the tip region (2), the shank portion (3), the external thread (5), and the receiving region (4) are formed integrally from a plastic material.

8. A fastening system according to any one of claims 4 through 7, **characterized in that** the receiving portion (4) is suitable for receiving and fastening screws (15) of various sizes, materials, and colors.

9. A fastening system according to any one of claims 4 through 8, **characterized in that** the end of the receiving portion (4) opposite the tip region (2) has an external profile (21) and/or an internal profile (22) suitable as a turning aid, to which a tool for turning the screw anchor (1) can be applied.

10. A fastening system according to any one of claims 4 through 9, **characterized in that** a circular, coaxial edge region (23) is arranged on the outer side of the end of the receiving region (4) opposite the tip region (2), the outer diameter of which corresponds to that of the adjacent thread (5).

## Revendications

1. Procédé de fixation d'un élément (17) sur un support (16) à l'aide d'au moins un dispositif de fixation sous la forme d'une cheville à vis (1) comportant une tige (3) pouvant traverser un trou de fixation (18) de l'élément (17), sur l'un des côtés de laquelle sont disposées une zone de pointe (2) se rétrécissant à partir de la partie tige (3) et, sur la zone de pointe (2) ainsi que sur la partie tige (3), un filetage extérieur (5) destiné au vissage dans le support (16), la tige (14) d'une vis (15) étant partiellement vissée dans une zone de réception (4) de la cheville à vis (1) qui lui fait face et qui est disposée sur le côté de la partie de tige (3) opposé à la zone de pointe (2),
**caractérisée en ce**
**que** l'élément de construction (17) est placé dans la position souhaitée contre le support (16), que la cheville à visser (1), avec la vis (15) partiellement vissée dans la zone de réception (4), est introduite à travers le trou de fixation (18) de l'élément de construction (17) et que la cheville à visser (1) est vissée dans le support (16) de manière autoperceuse par la vis (15) en vissant celle-ci dans la zone de réception (4) et en transmettant le couple par une rotation supplémentaire de la vis (15), une fois que la vis (15) est vissée dans la zone de réception (4), de la vis (15) à la cheville à vis (1) dans le support (16), de sorte que l'élément de construction (17) repose contre le support (16) et que la vis (15) repose contre l'élément de construction (17),
la vis (15) comportant, sur le côté de sa tête (12) tourné vers sa tige (14), une bague d'étanchéité (11) et
la zone de réception (4) comportant une première partie (6) s'évasant vers l'extérieur à partir de la partie de tige (3) vers l'extérieur pour recevoir la partie de pointe (2) de la vis (15) dans une première cavité (8), ainsi qu'une deuxième zone (7) adjacente à la première zone (6) pour recevoir au moins une partie de la tige (14) de la vis (15) dans une deuxième cavité (9), et
la deuxième cavité (9) étant de forme cylindrique et comportant, sur sa paroi, des nervures longitudinales (10) s'étendant dans le sens longitudinal de la zone de réception (4),
lesquelles pénètrent dans la deuxième cavité (9) et dans lesquelles le filetage (13) de la vis (15) peut être vissé, et
le filetage extérieur (5) s'étendant au moins en partie également au-delà de la zone de logement (4) et
le filetage extérieur (5) présentant le même diamètre extérieur dans la zone de tige (3) et dans la zone de logement (4).

2. Procédé selon la revendication 1, **caractérisé par** les étapes suivantes :
a) vissage partiel d'une vis (15) dans la zone de réception (4) du dispositif de fixation de la cheville à visser ;
b) positionnement de l'élément de construction (17) dans la position souhaitée sur le support (16) ;
c) Passage d'un dispositif de fixation à travers un trou de fixation (18) de l'élément de construction (16) et vissage autotaraudeur de la cheville à vis (1) dans le support (16) jusqu'à ce que l'élément de construction (17) repose contre le support (16) et que la vis (15) repose contre l'élément de construction (17).

3. Procédé selon la revendication 1, **caractérisé par** les étapes suivantes :
a) Vissage partiel d'une vis (15) dans la zone de réception (4) de la cheville à visser (1) ;
b) Mise en place de l'élément de construction (17) dans une position souhaitée contre le support (16) ;
c) Pré-perçage d'un trou (20) dans le support (16) ;
d) Insertion de la cheville à vis (1) dans le trou de perçage (20) du support (16) à travers un trou de fixation (18) de l'élément (17) ;
e) Vissage auto-taraudeur de la cheville à vis dans le trou (20) du support (16) jusqu'à ce que l'élément de construction (17) repose contre le support (16) et que la vis (15) repose contre l'élément de construction (17).

4. Système de fixation destiné à fixer un élément de construction (17) à un support (16), comprenant un dispositif de fixation sous la forme d'une cheville à vis (1) et d'une vis (15), le système de fixation étant conçu pour la mise en œuvre du procédé selon l'une des revendications 1 à 3,
la cheville à vis (1) comportant une partie de tige (3) pouvant être introduite à travers un trou de fixation (18) de l'élément de construction (17), sur un côté de laquelle est disposée une zone de pointe (2) se rétrécissant à partir de la partie de tige (3) et sur laquelle (2) ainsi que sur la partie tige (3) sont disposés un filetage extérieur (5) destiné au vissage dans le support, et
la cheville à visser (1) comportant, de l'autre côté, opposé à la zone de pointe (2), une zone de réception (4) pouvant également être introduite à travers le trou de fixation (18), dans laquelle la tige (14) de la vis (15) peut être vissée,
la vis (15) comportant, sur le côté de sa tête (12) tourné vers sa tige (14), une bague d'étanchéité (11), et la zone de réception (4) comportant une première zone (6) s'évasant vers l'extérieur à partir de la partie de tige (3) vers l'extérieur pour recevoir la partie de pointe (2) de la vis (15) dans une première cavité (8) et une deuxième zone (7) adjacente à la première zone (6) destinée à recevoir au moins une partie de la tige (14) de la vis (15) dans une deuxième cavité (9), et dans laquelle la deuxième cavité (9), de forme , est de forme cylindrique et comporte, sur sa paroi s'étendant dans le sens longitudinal de la zone de réception (4), qui pénètrent dans la deuxième cavité (9) et dans lesquelles le filetage (13) de la vis (15) peut être vissé, et dans laquelle le filetage extérieur (5) s'étend également, au moins en partie, au-delà de la zone de réception (4), et
le filetage extérieur (5) présentant le même diamètre extérieur dans la zone de tige (3) et dans la zone de logement (4).

5. Système de fixation selon la revendication 4, **caractérisé en ce que** la deuxième zone (7) est de forme cylindrique jusqu'à son extrémité libre.

6. Système de fixation selon la revendication 4, **caractérisé en ce que** plusieurs nervures longitudinales (10) sont réparties, de préférence de manière régulière, sur la circonférence de la paroi de la deuxième cavité (9).

7. Système de fixation selon l'une des revendications 4 à 6, **caractérisé en ce que** la partie de pointe (2), la partie de tige (3), le filetage extérieur (5) et la partie de réception (4) sont réalisés d'un seul tenant en matière plastique.

8. Système de fixation selon l'une des revendications 4 à 7, **caractérisé en ce que** la partie de réception (4) est adaptée à la réception et à la fixation de vis (15) de différentes tailles, matériaux et couleurs.

9. Système de fixation selon l'une des revendications 4 à 8, **caractérisé en ce que** l'extrémité de la zone de réception (4) opposée à la zone de pointe (2) présente un profil extérieur (21) et/ou un profil intérieur (22) adapté à servir d'aide à la rotation, sur lequel peut être appliqué un outil destiné à faire tourner la cheville à vis (1).

10. Système de fixation selon l'une des revendications 4 à 9, **caractérisé en ce qu'**une zone de bordure (23) circulaire et coaxiale est disposée sur la face extérieure de l'extrémité de la zone de réception (4) opposée à la zone de pointe (2), dont le diamètre extérieur correspond à celui du filetage adjacent (5).
